# EUROPEAN PATENT SPECIFICATION

(11) **EP 4 159 539 B1**
(45) Date of publication and mention of the grant of the patent: **19.02.2025**
(21) Application number: 22198908.0
(22) Date of filing: 30.09.2022
(51) Int. Cl.: B60Q 1/00, B60Q 1/076, F21S 41/19, F21S 41/657, F21S 45/47, F21S 45/42

(54) **LIGHTING MODULE FOR A VEHICLE LAMP OF AN AUTOMOTIVE VEHICLE**
BELEUCHTUNGSMODUL FÜR EINE FAHRZEUGLAMPE EINES KRAFTFAHRZEUGS
MODULE D'ÉCLAIRAGE POUR UN FEU DE VÉHICULE AUTOMOBILE

(30) Priority: 30.09.2021 FR 2110376
(43) Date of publication of application: 05.04.2023
(73) Proprietor: Valeo Vision, 93012 Bobigny Cedex (FR)
(72) Inventor: RAMÍREZ MOLINA, José María, 23600 MARTOS (ES); CONTRERAS LUQUE, Antonio, 23600 MARTOS (ES); VALDIVIA MATEOS, Gema, 23600 MARTOS (ES); SILES BARRIOS, Francisco Javier, 23600 MARTOS (ES)
(74) Representative: Valeo Visibility

(56) References cited:
- EP-A1- 0 654 375
- EP-A1- 3 109 537
- EP-A2- 2 907 697
- CN-A- 109 855 045
- FR-A1- 2 889 290
- JP-A- 2009 146 648

## Description

The present invention relates to a lighting module for a vehicle lamp of an automotive vehicle. More particularly, the present invention relates to an electrical connection assembly of the lighting module of the vehicle lamp.

Motor vehicle lamps are generally composed of a housing, which is closed by a transparent wall, through which one or more light beams emerge. This housing accommodates one or more lighting modules, which are assembled inside the housing by means of a bracket arranged in a chassis, plate or any other similar intermediate device which can bracket the lighting module(s) and which is configured for their assembly inside the housing. Such a bracket can be an individual bracket assigned to one lighting module or a collective bracket holding a plurality of these lighting modules. The lighting modules each comprise a light generator comprising at least one light source associated with an optical system.

Among the optical modules intended to equip motor vehicle headlamps, some can be movably assembled on the housing. For example, in the field of automotive lighting, it is known to have DBL-type (dynamic bending light) headlamps or movable optical elements for the adaptive lighting functions of ADB (adaptive driving beam) lights. A dynamic bending light allows the projected beam to rotate according to the curves present in the path of the vehicle. To make the optical elements movable, it is common to use electric actuators comprising a motor and a gear assembly.

A known lighting module for a vehicle lamp of an automotive vehicle is disclosed in CN 109 855 045 A.

Usually, electrical power to different loads in such lighting modules is provided by means of a flexboard or a flexible printed circuit, for example made from polymer into which conductive tracks are integrated. The flexboard includes a plurality of connectors. For instance, a first connector is provided to ensure the connection of the flexboard to the lighting module, a second connector connects the flexboard to a main connector of the vehicle lamp, and a third connector connects the flexboard to other control units fixed inside the housing of the vehicle lamp or outside the latter. However, the flexboard is costly, and to provide power supply to various electric loads of the vehicle lamp, it is necessary to have additional wires or cables along with the flexbaord. For instance, additional wires may be required to provide power supply to the fan of a heat sink of the vehicle lamp. With these additional wires or cables, the unit of the wiring harness may become rigid, if the wiring harness required to power different electric loads of the vehicle lamp is assembled in only one routing. Further, the rigidity of the wiring harness unit is not favorable as regards the freedom of movement of the lighting module and demands more torque from an actuator of the lighting module for proper operation.

An object of the invention is to alleviate the above-mentioned problems. To be more precise, an object of the invention is to provide a cost effective electrical connection assembly for a lighting module of the vehicle lamp while offering a long-term durability of the electric connection despite possible frequent and repeated movements of the lighting module inside the vehicle lamp.

Another object of the invention is to provide an electrical connection assembly, which enables to reduce the torque required to rotate the lighting module compared to the torque required to rotate a lighting module equipped with a flexboard.

Another object of the present invention is to provide an electrical connection assembly that uses a minimum number of wire harness routings and still can provide power supply to different electric loads to the vehicle lamp to perform different lighting and/or signaling functions, without using a flexboard.

According to an embodiment of the present invention, there is provided a lighting module for a vehicle lamp of an automotive vehicle, as defined in claim 1, the tFw light module comprising an electrical connection assembly having a main connector electrically connected to a power supply of the vehicle lamp by a primary wire harness, and a plurality of secondary connectors configured to provide the power supply to a plurality of electric loads of the vehicle lamp. The lighting module further comprises two sub-wire harness portions branching out from the main connector and routed along longitudinal sides of the lighting module to electrically connect the main connector and the plurality of secondary connectors. Thus, according to the present invention, the electrical connection assembly is provided for the vehicle lamps, without using flexboards like in conventional lighting modules. Hence, the electrical connection assembly proposed herein is less costly and can provide power supply to all electric loads of the vehicle lamp. Further, the number of wires or cables that can be exchanged between the lighting module and other electric loads of the vehicle lamp can be optimized. By having the wire harness in two sub-portions, the torque required to laterally move the lighting module equipped with the electrical connection assembly is reduced. Hence, load on an actuator of the lighting module can be reduced compared to conventional lighting modules. In addition, the accuracy of the rotation of the lighting module can be improved with the use of two sub-wire harness portions.

According to the present invention, the lighting module includes a fixed part and a movable part, and the two sub-wire harness portions are connected between the fixed part and the movable part such that points of mechanical connection together produce a freedom of movement limited in space. Further, the electrical connection assembly can be arranged in limited space in the lighting module.

In a non-limiting embodiment of the present invention, the movable part is connected to the fixed part so as to be able to rotate relatively to the fixed part. The rotation movement is relative to an axis of rotation. Preferably, the longitudinal side of the lighting module are parallel to the axis of rotation.

According to the present invention, the fixed part comprises a slot to fix the main connector therein, and a first left fixation point, and a first right fixation point; and the movable part comprises a movable frame provided with a second left fixation point and a second right fixation point. The right and left fixation points are situated respectively on the right and on the left. The fixation points are intended to fix the wire harness portions to the fixed part and the movable part such that wire harness portions can be firmly held during the movement of the lighting module. Left and right directions are relative to the position of the main connector. In a non-limiting embodiment, left and right directions are defined laterally relative to the axis of rotation, in particular perpendicularly to said axis of rotation.

In a non-limiting embodiment of the present invention, at least some of the secondary connectors are fixed on the movable part.

In a non-limiting embodiment of the present invention, all the secondary connectors are fixed on the movable part.

In a non-limiting embodiment of the present invention, the first left fixation point and the second left fixation point are substantially on a same first vertical line; and the first right fixation point and the second right fixation point are substantially on a same second vertical line. In an aspect, both the first and second vertical lines are on different lateral positions. Hence, the two sub-wire harness portions can be vertically positioned in the lighting module, and it results in minimizing the movement of the sub-wire harness portions during the movement of the lighting module. Further, the movement of the sub-wire harness portions can be minimized with the decrease in the length of the sub-wire harnesses between the fixed part and the movable part. The vertical direction is to be considered when the lighting module is in its orientation for a normal use when mounted on a vehicle. In a non-limiting embodiment the vertical direction is parallel to the axis of rotation defined above.

According to the present invention, a first sub-wire harness portion of the two sub-wire harness portions is routed from the main connector to one or more secondary connectors of the plurality of the secondary connectors via the first left fixation point and the second left fixation point, and a second sub-wire harness portion of the two sub-wire harness portions is routed from the main connector to remaining secondary connectors via the first right fixation point and the second right fixation point. In a non-limiting embodiment of the present invention, the first sub-wire harness portion and the second first sub-wire harness portion are joined with the first and second left fixation points, and the first and second right fixation points, respectively, by means of ties. Advantageously, the fixation points and ties connections with the fixation points ensure to minimize or completely avoid the breakage of the sub-wire harness portions during the movement of the lighting module. In addition, the fixation points and ties connections with the fixation points ensures that there is no relative movement between the sub connectors/main connector and the wire harness portions. Hence, with the present invention, a long-term durability of the electric connection is obtained despite possible frequent and repeated movements of the lighting module inside the vehicle lamp.

In a non-limiting embodiment of the present invention, the plurality of electric loads include at least a heat sink fan and/or an actuator.

In a non-limiting embodiment of the present invention, the plurality of electric loads comports a plurality of light sources, which are configured to perform lighting and/or signaling functions comprising at least one of high beam, low beam, dynamic bending lighting function (DBL) low beam and/or high beam, pixelated beam, Turn indicator (Tl) function, daytime running light (DRL) function, and position lamp. Advantageously, with the proposed wire harness arrangement between the fixed part and the movable part, electrical power can be supplied to all the electric loads of the vehicle lamp to perform different lighting and/or signaling functions, without using any additional cables and/or flexboards.

In a non-limiting embodiment of the present invention, the plurality of light sources is arranged on the movable part.

In a non-limiting embodiment of the present invention, the two sub-wire harness portions are routed along parallel longitudinal sidewalls of a heat sink. Preferably, said longitudinal sidewalls are vertical. In a non-limiting embodiment the longitudinal side of the lighting module are parallel to the axis of rotation.

The present invention also relates to a vehicle lamp comprising at least one lighting module according to the present invention.

In a non-limiting embodiment of the present invention, the electrical connection assembly of the at least one lighting module is arranged on a rear side of the vehicle lamp.

Thus, the present invention provides a cost effective electrical connection assembly for a lighting module of the vehicle lamp while offering a long-term durability of the electric connection despite possible frequent and repeated movements of the lighting module inside the vehicle lamp.

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1A illustrates a rear perspective view of a lighting module of a vehicle lamp equipped with an electrical connection assembly, according to an embodiment of the present invention.
Fig.1B illustrates a front perspective view of the lighting module of the Fig.1A in which the electrical connection assembly is connected to a power supply of the vehicle lamp, according to an embodiment of the present invention.
Fig.1C illustrates a side view of the lighting module shown in Fig.1A, according to an embodiment of the present invention.
Fig. 2A illustrates a fixed part of the lighting module shown in the Fig.1A, according to an embodiment of the present invention.
Fig. 2B illustrates a movable frame of a movable part of the lighting module shown in the Fig.1A, according to an embodiment of the present invention.
Fig.3 illustrates an electrical connection assembly associated with the lighting module, according to the embodiment of the present invention.

Embodiments of the present application will below be explained in details by ways of examples with reference to the accompanied drawings. Throughout the description, same or similar reference numerals represent same or similar parts. The following description of the embodiments with reference to the drawings is intended to explain the general inventive concept of the present application, instead of limiting it to the present invention.

In the following detailed description, for purposes of explanation, numerous specific details are set forth in order to provide a thorough understanding of the disclosed embodiments. It will be apparent, however, that one or more embodiments may be practiced without these specific details.

The terms "main connector" and "secondary connectors" discussed in the specification generally refers to electric connectors configured to join the electrical conductors to create an electrical circuit.

The term "wire harness" or "wiring harness" is commonly used to refer to an assembly comprising a bundle of electrical cables.

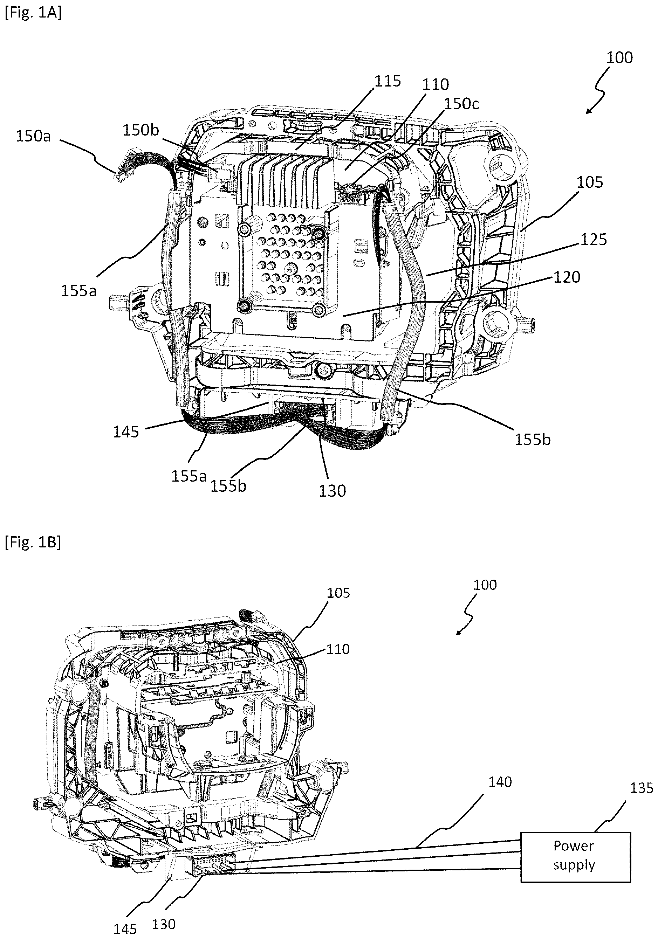

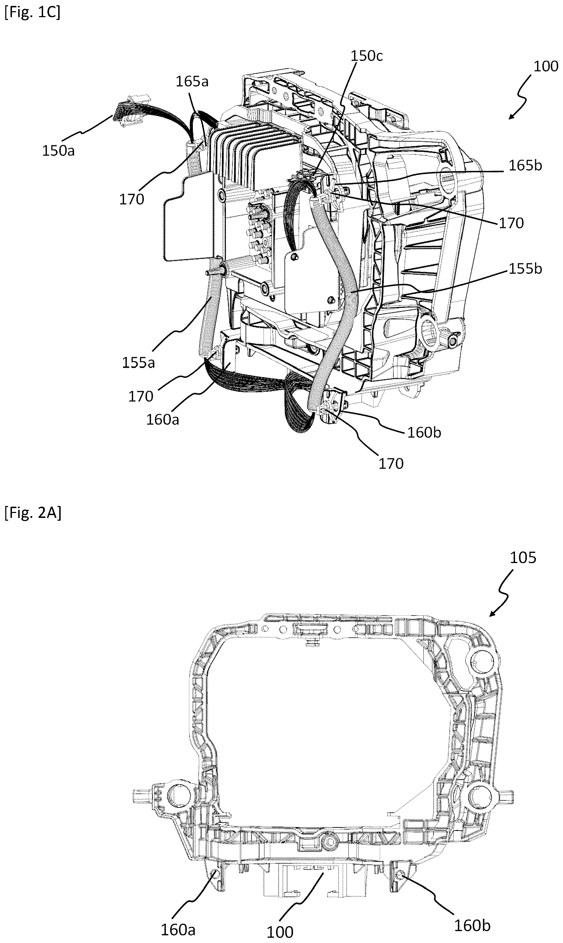

Motor vehicle lamps are generally composed of a housing, which is closed by a transparent outer lens, through which one or more light beams emerge. This housing accommodates one or more lighting modules, which are assembled inside the housing by means of a bracket. Fig.1A illustrates a rear perspective view of a lighting module of a vehicle lamp equipped with an electrical connection assembly, according to an embodiment of the present invention. Fig.1B illustrates a lighting module of the Fig.1A in which the electrical connection assembly is connected to a power supply of the vehicle lamp, according to an embodiment of the present invention. Fig.1C illustrates a side view of the lighting module shown in Fig.1A, according to an embodiment of the present invention.

The lighting module 100 comprises at least one light source (not shown in the Figures) associated with an optical system (not shown in the Figures). The light source is any device able to emit light, such as a filament bulb, a gas-discharge bulb or also a device combining one or more light-emitting semi-conductor light sources, or one or more light-emitting diodes (LEDs). The optical system can modify at least one parameter of the light generated by the light source in order to emit the light beam by the lighting module. The optical system comprises optical components such as a reflector, lens, diffuser, collimator or any other device (not shown in the Figures) that can modify at least one of the parameters of the light generated by the light source, such as its average reflection and/or its direction, or even a combination of a plurality of these elements (not shown in the Figures).

The lighting module 100 is equipped with various devices necessary for its operation, such as means to activate the light source(s), which it comprises, means of cooling and a substructure to carry all the components of the lighting module 100.

Among the lighting modules intended to equip motor vehicle headlamps, some can be movably assembled on the housing. For example, the movable lighting module is used for a dynamic bending light function (DBL), according to which the lighting module is movably assembled on the housing with lateral reflector movement relative to the general axis of forward movement of the vehicle or longitudinal axis of the vehicle. These DBL functions can be applied to low beam functions, then called bending light or dynamic bending light (DBL), or to high beam functions, again called high beam DBL. For example, yet another known function lies in the dynamic range levelling of the lighting module 100 based on assembling the lighting module 100 so that it can move on the housing relative to the resting plane of the vehicle on the ground. Other complex functions are also known, according to which various lighting modules are movably assembled on the housing and cooperate together in order to obtain selective illumination of the traffic lane, in particular in order to avoid dazzling users of other oncoming vehicles or those being followed.

The views of the lighting module 100 illustrated in Fig. 1A, Fig. 1B, and Fig.1C shows, for example, the ability of the lighting module 100 to move with lateral rotation movement, to fulfill a headlamp function known as DBL. The rotation movement is according to a vertical axis so that the beam projected by the lighting module 100 can move horizontally. It should be noted that the present invention could be applicable to any type of lighting module.

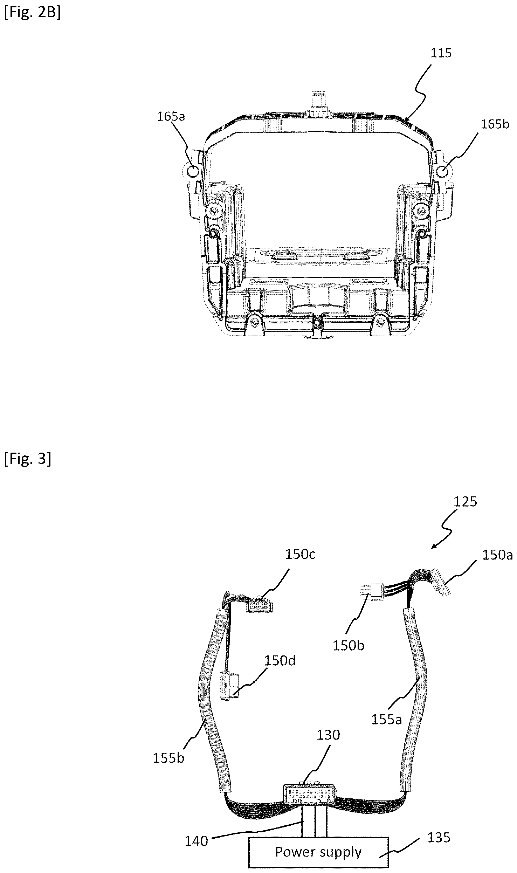

The lighting module shown in the FIG.1A, Fig.1B and Fig.1C includes a fixed part 105 and a movable part 110.For instance, the fixed part 105 is a bracket, and the movable part 110 comprises a movable frame 115 (clearly shown in the Fig.2B), one or more light sources, a light source support, an optical system (not shown in the Figures), and a heat sink 120.The one or more light sources, the light source support, the optical system and the heat sink are fixed in the movable frame 115. Further, the movable frame 115 is connected to the fixed part 105 so as to be able to rotate relatively to the fixed part 105. For instance, the connection between the fixed part 105 and the movable frame 115 can be realized for example by bearings.

Fig. 2A illustrates a fixed part of the lighting module shown in the Fig.1A, according to an embodiment of the present invention. Fig. 2B illustrates a movable frame of a movable part of the lighting module shown in the Fig.1A, according to an embodiment of the present invention.

According to an embodiment of the present invention, the lighting module 100 comprises an electrical connection assembly 125 arranged between the fixed part 105 and the movable part 110. The electrical connection assembly 125 may be arranged on a rear side of the vehicle lamp, i.e., in a direction opposite to the main direction of the light beam emitted by the lighting module 100. The electrical connection assembly 125 may be configured to provide power supply to different electric loads of the vehicle lamp.

Fig.3 illustrates a rear view of an electronic connection assembly 125 associated with the lighting module 100, according to the embodiment of the present invention. By way of an example, and not limitation, the plurality of electric loads include a plurality of light sources and/or a heat sink fan and/or an actuator (not shown in the Figures). In a non-limiting embodiment of the present invention, the plurality of light sources are configured to perform lighting and/or signaling functions comprising at least one of high beam, low beam, dynamic bending lighting function (DBL) low beam and/or high beam, pixelated beam, Turn indicator (Tl) function, daytime running light (DRL) function, and position lamp.

The electrical connection assembly 125 of the lighting module 100 comprises a main connector 130 electrically intended to be connected to a power supply 135 (shown in the Fig.1B and Fig.3) of the vehicle lamp by a primary wire harness 140. In an aspect, the main connector 130 may be arranged in a slot 145 provided on the fixed part 105. For instance, as can be seen in the Fig.1A, the main connector is fixed in the slot 145 provided on a bottom portion of the fixed part 105. The electrical connection assembly 125 further comprises a plurality of secondary connectors 150a, 150b, 150c, 150d (clearly shown in Fig.3) configured to provide the power supply to the plurality of electric loads of the vehicle lamp. In an aspect, the secondary connectors 150a, 150b, 150c, 150d may be arranged on the movable part 110. The lighting module 100 further comprises two sub-wire harness portions 155a, 155b branching out from the main connector 130 and routed along longitudinal sides of the lighting module 100 to electrically connect the main connector 130 and the plurality of secondary connectors 150a, 150b, 150c, 150d. For instance, the two sub-wire harness portions 155a, 155b are routed along parallel longitudinal sidewalls of a heat sink 120, as can be seen from the Fig.1A. Although two sub-wire harness portions 155a, 155b are illustrated in the exemplary lighting module, it is understood to a person skilled in that art that more than two-wire harness portions can be employed in the electrical connection assembly 125 of the lighting module 100. For instance, the electrical connection assembly 125 may have three sub-wire harness portions.

According to an embodiment of the present invention, the fixed part 105 is provided with a first left fixation point 160a, and a first right fixation point 160b (clearly shown in Fig.2A); and the movable frame 115 of the movable part 110 comprises a second left fixation 165a point and a second right fixation point 165b (clearly shown in Fig.2B). The fixation points 160a, 160b, 165a, 165b are intended to fix the wire harness portions 155a, 155b to the fixed part 105 and the movable part 110 such that wire harness portions 155a, 155b can be firmly held during the movement of the movable part 110 of the lighting module 100.

Further, as can be seen from the Fig.1A, Fig.1C, and Fig.3, a first sub-wire harness portion 155a of the two sub-wire harness portions 155a, 155b is routed from the main connector 130 to one or more secondary connectors 150a, 150b of the plurality of the secondary connectors via the first left fixation point 160a and the second left fixation point 165a, and a second sub-wire harness portion 155b of the two sub-wire harness portions 155a, 155b is routed from the main connector 130 to remaining secondary connectors 150c, 150d via the first right fixation point 160b and the second right fixation point 165b. Further, the first sub-wire harness portion 155a and the second first sub-wire harness portion 155b are joined with the first and second left fixation points 160a, 165a, and the first and second right fixation points 160b, 165b, respectively, by means of ties 170. Advantageously, the fixation points 160a, 160b, 165a, 165b and ties 170 connections with the fixation points 160a, 160b, 165a, 165b ensures that the movement of wires is very small and with almost no torsion. In addition, the fixation points 160a, 160b, 165a, 165b and ties 170 connections with the fixation points 160a, 160b, 165a, 165b ensures that there is no relative movement between the sub connectors (150a, 150b, 150c, 150d)/main connector 130 and the wire harness portions 155a, 155b. Thus, preventing the movement of cables or wires between the connectors 130, 150a, 150b, 150c, 150d and the fixation points 160a, 160b, 165a, 165b, and thereby reducing the possibility of breakage during the movement of the lighting module 100. Hence, in accordance with the present invention, a long-term durability of the electric connection is obtained despite possible frequent and repeated movements of the lighting module 100 inside the vehicle lamp.

In a non-limiting embodiment of the present invention, the first left fixation point 160a and the second left fixation point 165a are substantially on a same first vertical line; and the first right fixation point 160b and the second right fixation point 165b are substantially on a same second vertical line. In an aspect, both the first and second vertical lines are on different lateral positions. Hence, the sub-wire harness portions 155a, 155b can be vertically positioned in the lighting module 100, and it results in minimizing the movement of the sub-wire harness portions 155a, 155b during the movement of the lighting module 100. Further, the movement of the sub-wire harness portions 155a, 155b can be minimized with the decrease in the length of the sub-wire harnesses portions 155a, 155b between the fixed part 105 and the movable part 110.

According to another embodiment, the present invention also relates to a vehicle lamp comprising at least one lighting module 100 as previously described.

Thus, according to the present invention, the electrical connection assembly 125 is provided for the vehicle lamps, without using flexboards like in conventional lighting modules. Hence, the electrical connection assembly 125 proposed herein is less costly and can supply power to all electric loads of the vehicle lamp. Further, the number of wires or cables that can be exchanged between the lighting module 100 and other electric loads of the vehicle lamp can be optimized. By having the wire harness in two sub-portions 155a, 155b, the torque required to laterally move the lighting module 100 equipped with the electrical connection assembly 125 is reduced. Hence, load on an actuator of the lighting module 100 can be reduced compared to conventional lighting modules. In addition, the accuracy of the rotation of the lighting module 100 can be improved with the use of sub-wire harness portions 155a, 155b. Hence, the present invention provides a cost effective electrical connection assembly 125 for the lighting module 100 of the vehicle lamp while offering a long-term durability of the electric connection despite possible frequent and repeated movements of the lighting module 100 inside the vehicle lamp.

The person skilled in the art realizes that the present invention by no means is limited to the preferred embodiments described above. On the contrary, many modifications and variations are possible within the scope of the appended claims. Also, the skilled person readily realizes that the different embodiments described herein may be combined freely to obtain new combinations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantages.

## Claims

1. A lighting module (100) for a vehicle lamp of an automotive vehicle,
the lighting module (100) comprising an electrical connection assembly (125) having a main connector (130) suitable to be electrically connected to a power supply (135) of the vehicle lamp by a primary wire harness (140);
a plurality of secondary connectors (150a, 150b, 150c, 150d ) configured to provide the power supply (135) to a plurality of electric loads of the vehicle lamp; and
**characterized in that**, the lighting module (100) comprises two sub-wire harness portions (155a, 155b) branching out from the main connector (130) and routed along longitudinal sides of the lighting module (100) to electrically connect the main connector (100) and the plurality of secondary connectors (150a, 150b, 150c, 150d ),
wherein the lighting module (100) includes a fixed part (105) and a movable part (110), and wherein the two sub-wire harness portions (155a, 155b) are connected between the fixed part (105) and the movable part (110),
wherein the fixed part (105) comprises a slot (145) to fix the main connector (130) therein, and a first left fixation point (160a), and a first right fixation point (160b), left and right directions being relative to the position of the main connector; and
the movable part (110) comprises a movable frame (115) provided with a second left fixation point (165a) and a second right fixation point (165b),
wherein a first sub-wire harness portion (155a) of the two sub-wire harness portions (155a, 155b) is routed from the main connector (130) to one or more secondary connectors (150a, 150b) of the plurality of the secondary connectors via the first left fixation point (160a) and the second left fixation point (165a); and
a second sub-wire harness portion (155b) of the two sub-wire harness portions (155a, 155b) is routed from the main connector (130) to remaining secondary connectors (150c, 150d) via the first right fixation point (160b) and the second right fixation point (165b).

2. The lighting module (100) as claimed in as claimed in claim 1, wherein
the first left fixation point (160a) and the second left fixation point (165a) are substantially on a same first vertical line; and
the first right fixation point (160b) and the second right fixation point (165b) are substantially on a same second vertical line, wherein the vertical direction is to be considered when the lighting module is in its orientation for a normal use when mounted on a vehicle.

3. The lighting module (100) as claimed in any one of claims 1 or 2,
wherein the first sub-wire harness portion (155a) and the second first sub-wire harness portion (155b) are joined with the first and second left fixation points (160a, 165a), and the first and second right fixation points (160b, 165b), respectively, by means of ties (170).

4. The lighting module (100) as claimed in any one of preceding claims wherein the plurality of electric loads include at least a heat sink fan and/or an actuator.

5. The lighting module (100) as claimed in claim 4, wherein the plurality of electric loads comports a plurality of light sources which are configured to perform lighting and/or signaling functions comprising at least one of high beam, low beam, dynamic bending lighting function (DBL) low beam and/or high beam, pixelated beam, Turn indicator (Tl) function, daytime running light (DRL) function, and position lamp.

6. The lighting module (100) as claimed in any one of claim 4 and claim 5, wherein the plurality of light sources is arranged on the movable part (110).

7. The lighting module (100) as claimed in any one of preceding claims wherein the two sub-wire harness portions (155a, 155b) are routed along parallel longitudinal sidewalls of a heat sink (120).

8. A vehicle lamp comprising at least one lighting module (100) as claimed in any one of preceding claims 1 to 7.

9. The vehicle lamp as claimed in claim 8, wherein the electrical connection assembly (125) of the at least one lighting module (100) is arranged on a rear side of the vehicle lamp.

## Patentansprüche

1. Beleuchtungsmodul (100) für eine Fahrzeuglampe eines Kraftfahrzeugs, wobei das Beleuchtungsmodul (100) Folgendes umfasst: eine elektrische Verbindungsanordnung (125) mit einem Hauptverbinder (130), der dazu geeignet ist, durch einen Primärkabelbaum (140) elektrisch mit einer Stromversorgung (135) der Fahrzeuglampe verbunden zu werden;
eine Vielzahl von Sekundärverbindern (150a, 150b, 150c, 150d), die dazu ausgelegt sind, die Stromversorgung (135) einer Vielzahl von elektrischen Lasten der Fahrzeuglampe bereitzustellen; und
**dadurch gekennzeichnet, dass** das Beleuchtungsmodul (100) zwei Teilkabelbaumabschnitte (155a, 155b) umfasst, die sich von dem Hauptverbinder (130) verzweigen und entlang der Längsseiten des Beleuchtungsmoduls (100) geführt sind, um den Hauptverbinder (100) und die Vielzahl von Sekundärverbindern (150a, 150b, 150c, 150d) elektrisch zu verbinden, wobei das Beleuchtungsmodul (100) einen feststehenden Teil (105) und einen beweglichen Teil (110) aufweist, und wobei die zwei Teilkabelbaumabschnitte (155a, 155b) zwischen dem feststehenden Teil (105) und dem beweglichen Teil (110) verbunden sind,
wobei der feststehende Teil (105) einen Schlitz (145) zum Befestigen des Hauptverbinders (130) darin und einen ersten linken Befestigungspunkt (160a) und einen ersten rechten Befestigungspunkt (160b) umfasst, wobei die linke und rechte Richtung relativ zur Position des Hauptverbinders sind; und
der bewegliche Teil (110) einen beweglichen Rahmen (115) umfasst, der mit einem zweiten linken Befestigungspunkt (165a) und einem zweiten rechten Befestigungspunkt (165b) versehen ist,
wobei ein erster Teilkabelbaumabschnitt (155a) der zwei Teilkabelbaumabschnitte (155a, 155b) von dem Hauptverbinder (130) zu einem oder mehreren Sekundärverbindern (150a, 150b) der Vielzahl von Sekundärverbindern über den ersten linken Befestigungspunkt (160a) und den zweiten linken Befestigungspunkt (165a) geführt ist; und
ein zweiter Teilkabelbaumabschnitt (155b) der zwei Teilkabelbaumabschnitte (155a, 155b) von dem Hauptverbinder (130) zu den verbleibenden Sekundärverbindern (150c, 150d) über den ersten rechten Befestigungspunkt (160b) und den zweiten rechten Befestigungspunkt (165b) geführt ist.

2. Beleuchtungsmodul (100) nach Anspruch 1, wobei der erste linke Befestigungspunkt (160a) und der zweite linke Befestigungspunkt (165a) im Wesentlichen auf einer gleichen ersten vertikalen Linie liegen; und
der erste rechte Befestigungspunkt (160b) und der zweite rechte Befestigungspunkt (165b) im Wesentlichen auf einer gleichen zweiten vertikalen Linie liegen, wobei die vertikale Richtung zu berücksichtigen ist, wenn sich das Beleuchtungsmodul in seiner Ausrichtung für eine normale Verwendung befindet, wenn dieses an einem Fahrzeug montiert ist.

3. Beleuchtungsmodul (100) nach einem der Ansprüche 1 oder 2, wobei der erste Teilkabelbaumabschnitt (155a) und der zweite Teilkabelbaumabschnitt (155b) mit dem ersten und dem zweiten linken Befestigungspunkt (160a, 165a) beziehungsweise dem ersten und zweiten rechten Befestigungspunkt (160b, 165b) mittels Kabelbindern (170) verbunden sind.

4. Beleuchtungsmodul (100) nach einem der vorhergehenden Ansprüche, wobei die Vielzahl von elektrischen Lasten mindestens einen Kühlkörperlüfter und/oder einen Aktuator beinhalten.

5. Beleuchtungsmodul (100) nach Anspruch 4, wobei die Vielzahl von elektrischen Lasten eine Vielzahl von Lichtquellen umfasst, die dazu ausgelegt sind, Beleuchtungs- und/oder Signalfunktionen auszuführen, die mindestens eines von Fernlicht, Abblendlicht, dynamischem Kurvenlicht (DBL) Abblendlicht und/oder Fernlicht, pixeliertem Lichtstrahl, Blinker(TI)-Funktion, Tagfahrlicht(DRL)-Funktion und Positionslampe umfassen.

6. Beleuchtungsmodul (100) nach einem der Ansprüche 4 und 5, wobei die Vielzahl von Lichtquellen auf dem beweglichen Teil (110) angeordnet ist.

7. Beleuchtungsmodul (100) nach einem der vorhergehenden Ansprüche, wobei die zwei Teilkabelbaumabschnitte (155a, 155b) entlang paralleler Längsseitenwände eines Kühlkörpers (120) geführt sind.

8. Fahrzeuglampe, die mindestens ein Beleuchtungsmodul (100) nach einem der vorhergehenden Ansprüche 1 bis 7 umfasst.

9. Fahrzeuglampe nach Anspruch 8, wobei die elektrische Verbindungsanordnung (125) des mindestens einen Beleuchtungsmoduls (100) auf einer Rückseite der Fahrzeuglampe angeordnet ist.

## Revendications

1. Module d'éclairage (100) pour un phare de véhicule d'un véhicule automobile, le module d'éclairage (100) comprenant un ensemble de connexion électrique (125) comportant
un connecteur principal (130) électriquement adapté pour être électriquement connecté à une alimentation électrique (135) du phare de véhicule par un faisceau de fils primaire (140) ;
une pluralité de connecteurs secondaires (150a, 150b, 150c, 150d) configurés pour fournir l'alimentation électrique (135) à une pluralité de charges électriques du phare de véhicule ; et
**caractérisé en ce que** le module d'éclairage (100) comprend deux sous-parties de faisceau de fils (155a, 155b) se ramifiant à partir du connecteur principal (130) et amenées à passer le long des côtés longitudinaux du module d'éclairage (100) pour connecter électriquement le connecteur principal (100) et la pluralité de connecteurs secondaires (150a, 150b, 150c, 150d) ;
dans lequel le module d'éclairage (100) comprend une partie fixe (105) et une partie mobile (110), et dans lequel les deux sous-parties de faisceau de fils (155a, 155b) sont connectées entre la partie fixe (105) et la partie mobile (110) ;
dans lequel la partie fixe (105) comprend un emplacement (145) pour fixer le connecteur principal (130) dans celui-ci, et un premier point de fixation gauche (160a), et un premier point de fixation droit (160b), les directions gauche et droite étant relatives à la position du connecteur principal ; et
la partie mobile (110) comprend un cadre mobile (115) pourvu d'un deuxième point de fixation gauche (165a) et d'un deuxième point de fixation droit (165b) ; et
dans lequel une première sous-partie de faisceau de fils (155a) des deux sous-parties de faisceau de fils (155a, 155b) est amenée à passer du connecteur principal (130) vers un ou plusieurs connecteurs secondaires (150a, 150b) de la pluralité de connecteurs secondaires via le premier point de fixation gauche (160a) et le deuxième point de fixation gauche (165a) ; et
une deuxième sous-partie de faisceau de fils (155b) des deux sous-parties de faisceau de fils (155a, 155b) est amenée à passer du connecteur principal (130) vers les connecteurs secondaires restants (150c, 150d) via le premier point de fixation droit (160b) et le deuxième point de fixation droit (165b).

2. Module d'éclairage (100) selon la revendication 1, dans lequel le premier point de fixation gauche (160a) et le deuxième point de fixation gauche (165a) sont sensiblement sur une même première ligne verticale ; et
le premier point de fixation droit (160b) et le deuxième point de fixation droit (165b) sont sensiblement sur une même deuxième ligne verticale, la direction verticale étant à considérer lorsque le module est dans son orientation pour un usage normal lorsque monté sur un véhicule.

3. Module d'éclairage (100) selon la revendication 1 ou 2, dans lequel la première sous-partie de faisceau de fils (155a) et la deuxième sous-partie de faisceau de fils (155b) sont respectivement reliées aux premier et deuxième points de fixation gauches (160a, 165a), et aux premier et deuxième points de fixation droits (160b, 165b), au moyen d'attaches (170).

4. Module d'éclairage (100) selon l'une quelconque des revendications précédentes, dans lequel la pluralité de charges électriques comprend au moins un ventilateur de dissipation thermique et/ou un actionneur.

5. Module d'éclairage (100) selon la revendication 4, dans lequel la pluralité de charges électriques comporte une pluralité de sources lumineuses qui sont configurées pour assurer des fonctions d'éclairage et/ou de signalisation comprenant au moins l'un des éléments suivants : feu de route, feu de croisement, feu de croisement et/ou feu de route à fonction d'éclairage orientable dynamiquement (DBL), feu pixélisé, fonction de clignotant (TI), fonction de feu de circulation de jour (DRL) et feu de position.

6. Module d'éclairage (100) selon l'une quelconque des revendications 4 et 5, dans lequel la pluralité de sources lumineuses est agencée sur la partie mobile (110).

7. Module d'éclairage (100) selon l'une quelconque des revendications précédentes, dans lequel les deux sous-parties de faisceau de fils (155a, 155b) sont amenées à passer le long des parois latérales longitudinales parallèles d'un dissipateur thermique (120).

8. Phare de véhicule comprenant au moins un module d'éclairage (100) selon l'une quelconque des revendications 1 à 7 précédentes.

9. Phare de véhicule selon la revendication 8, dans lequel l'ensemble de connexion électrique (125) dudit au moins un module d'éclairage (100) est agencé sur une face arrière du phare de véhicule.
